# EUROPEAN PATENT APPLICATION

(11) **EP 3 178 738 A1**
(43) Date of publication of application: **14.06.2017**
(21) Application number: 15198291.5
(22) Date of filing: 07.12.2015
(51) Int. Cl.: B64C 25/50, G05D 1/00

(54) **FULLY ELECTRIC SPEED-PROPORTIONAL NOSE WHEEL STEERING SYSTEM FOR AN AIRCRAFT**

(71) Applicant: Safran Landing Systems UK Ltd, Gloucester, Gloucestershire GL2 9QH (GB)
(72) Inventor: SHARPE, peter, Chepstow Monmouthshire NP16 5FA (GB)
(74) Representative: Latham, Stuart Alexander

(57) **Abstract**

The present invention relates to a drive system for an aircraft. More specifically, it relates to a fully electric speed-proportional control and drive system for the nose wheel of an aircraft wherein variable steering authority is accomplished by monitoring of the signal from a tiller and rudder pedals by a nose wheel controller in conjunction with the speed of the aircraft, in order to command and power an electromechanical steering, actuator to achieve speed-proportional variable steering authority. This provides a system with a quicker response time than current hydraulic-based systems which can help reduce nose wheel shimmy, elimination of certain nose wheel steering failure modes associated with hydraulic systems and has a reduced weight when used in small-to-medium sized aircraft.

## Description

### FIELD OF THE INVENTION

The present invention relates to a nose wheel steering system for an aircraft. More specifically, it relates to a fully electric speed-proportional system in which steering inputs from an electronic tiller and/or rudder pedals, together with ground speed data from speed sensor(s) and a nose wheel position sensor are sent to an electric controller, which automatically determines the correct steering target angle output for the aircraft speed with a software based algorithm, before determining the correct polarity and magnitude of power to deliver to an electromechanical drive actuator in order to steer the nose gear to the correct target angle computed by the controller.

### BACKGROUND OF THE INVENTION

During the ground regime of a flight (taxiing, take-off and landing), modem aircraft including business jets, helicopters and airliners achieve directional control-using landing gear located beneath the front portion of the fuselage, comprised of one or two individual wheels, called the nose wheel. At low speeds, the nose wheel is required to have a high steering angle range to enable a high degree of manoeuvrability. When the aircraft is moving at high speeds, for example, during landing or take-off, the nose wheel is required to turn only at small angles in order to make minor adjustments to the aircraft direction. Making large adjustments to the nose wheel angle at high speeds is dangerous and can cause a lack of control of the aircraft.

In order to account for the above, present electronically controlled nose wheel steering systems may have a continuously variable gain or dual mode gain steering control system, which may be automatically or manually selected depending on the speed of the aircraft. In this manner, while the plane is moving at low speeds, i.e. during taxiing, the sensitivity between the nose wheel control and the nose wheel is high, allowing the pilot to impart large nose wheel steering angle deflections with small control inputs via the tiller or rudder pedals. As the aircraft gains speed, the sensitivity between the control and the nose wheel may be automatically decreased by an electronic controller or manually selected to a reduced sensitivity mode by the pilot by means of a switch, or a secondary control input i.e. steering with the rudder pedals instead of the tiller, such that the same input to a control will cause the nose wheel to turn a smaller angle, thus maintaining a finer degree of control over the aircraft, preventing over-controlling of the aircraft at high ground speeds.

The specific systems used presently tend to be hydraulic or electro-hydraulic systems in which an electrical output from the control system commands a servo-directional valve of a hydraulic system or a direct mechanical input controls a directional valve of a hydraulic drive system, which controls the direction of movement of a hydraulic actuator, such that the nose wheel is turned hydraulically.

An example of such a system can be found in US patent no. US 3,753,540, which discusses using a servo system in combination with an electro-hydraulic control system to mechanically increase the steering range of a hydraulic steering system as an aircraft slows down.

More recent systems have attempted a slightly different approach, such as those discussed in US 8,473,159 B2 which relate to a variable gain electronic control of hydro-mechanical system for control of the nose wheel by means of a programmable electronic controller.

Hydro-mechanical systems and electro-hydraulic systems have various issues associated with them. Hydraulic systems are dependent on servo valves and shut-off valves, which-can be susceptible to contamination and wear, and can be difficult to maintain without fluid leakage.

Further, systems in which electrically commanded and mechanically commanded servo valves are used to control steering direction are particularly sensitive to contamination induced uncommanded steer, which can result in dangerous runway excursions. Hydraulic based steering systems are also susceptible to nose wheel shimmy vibration (speed wobble) in certain conditions. Hydraulic systems are also regarded as somewhat heavy for a given power output, particularly in small-to-medium sized aircraft.

The present invention aims to overcome these problems by providing a system which is fully electric in its command system and its power system (fly by wire & power by wire), such that contamination induced failure modes associated with hydraulic systems are not possible and maintenance is much simpler.

### SUMMARY OF THE INVENTION

In order to solve the problems associated with the prior art, the present invention provides a nose wheel steering system for an aircraft, comprising: at least one nose wheel control input, each at least one nose wheel input being arranged to produce an electrical output signal proportional to the position of the at least one nose wheel control input; a controller, with variable gain at least in part based on speed, arranged to receive the electrical output signal(s) from the at least one nose wheel control input, amplify them individually to compute desired target steering angles and to output an electrical power output signal; and an electromechanical nose wheel drive means arranged to receive the electrical power output signal from the controller

As will be appreciated, the present invention provides several advantages over the prior art. For example, an electromechanical system provides an improved response rate due to the shorter control loop required to connect the system, due to the deletion of servo-electric torque motors and valve spools needed in present electro-hydraulic servo valves, which have a response lag time associated with them, and the elimination of dependence on a hydraulic power, supply. Further, an electromechanical system allows for more precise control over steering, due to the use of infinitely variable command and feedback position sensing, combined with direct step-less electronic power control of the actuator. A fully electric speed-proportional nose wheel steering system also provides a control system that is much lighter than hydraulics-based systems when used in small-to-medium sized aircraft, due to the lack of hydraulic tubes, hoses, valves, filters and accumulators which are needed to power a hydraulic nose wheel steering system.

Furthermore, an electromechanically driven nose wheel steering system innately has improved resilience to nose wheel shimmy (speed wobble) issues due to the elimination of hydro-mechanical backlash, improved response rate of the system, and more precise control. The command-feedback control loop of an electromechanical system shall also have a refresh rate that can be tuned to dampen the natural harmonic frequency of the nose wheel steering system, thereby eliminating 'shimmy'.

Crucially, due to the elimination of hydraulic servo valves, an all-electric nose wheel steering system is immune to hard-over uncommanded steering events associated with hydraulic blockages and contamination, which may lead to stuck valves that can lead to dangerous runway excursions on take-off or landing.

Traditional mechanical and hydraulic nose wheel steering systems also typically embody a centring cam system in the shock absorber, in order to centre the nose wheel in preparation for landing gear retraction, extension and landing, however centring cams are subject to fatigue, and can cause nose wheel steering hard-over events if they fail, but with a continuous duty electromechanical steering system centring, cams are not needed, as the controller can automatically centre the nose wheel by continuously monitoring its position.

The at least one nose wheel control input of the nose wheel steering system may comprise a hand tiller and/or rudder pedals. These provide a simple steering input means for the pilot(s).

The nose wheel steering system may also comprise an angle position sensor arranged to relay a current nose wheel angle to the controller. In this manner, the controller knows the angle of the wheel, and can adjust its output signals accordingly.

The nose wheel steering system may further comprise a ground speed sensor arranged to relay a current ground speed of the aircraft to the controller. This provides the advantage of up-to-date ground speed, allowing the controller to adjust the variable gain of the nose wheel control input without relying on external speed data.

The nose wheel steering system may comprise an air speed system arranged to relay a current air speed of the aircraft to the controller. This provides the advantage of up-to-date air speed, allowing the controller to adjust the variable gain of the nose wheel control input without relying on external speed data.

The nose wheel steering system may also comprise a weight-on-wheels microswitch arranged to send an electric signal to the controller when a weight is detected on the wheels of the aircraft. This allows the controller to switch between using the ground speed and the air speed to adjust the variable gain of the nose wheel control inputs.

The electric output from the control may be of differing polarities depending upon which way the nose wheel is intended to turn. This provides a simplified mean of controlling the actuation, removing the need for complicated electrical signals to determine nose wheel turning direction.

### BRIEF DESCRIPTION OF THE DRAWINGS

Other advantages and benefits of the present invention will become apparent from a consideration of the following description and accompanying drawings, in which:
FIGURE 1 shows a structural view of the present invention; and
FIGURE 2 shows a graph of the integrated electronic steer authority of the present invention.

### DETAILED DESCRIPTION OF EXEMPLARY EMBODIMENTS

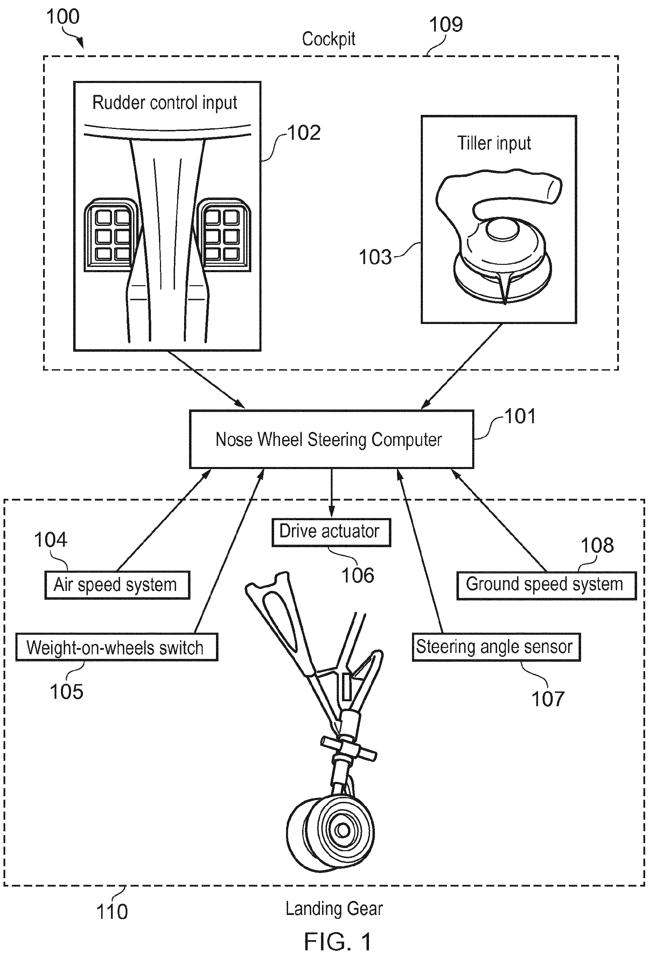

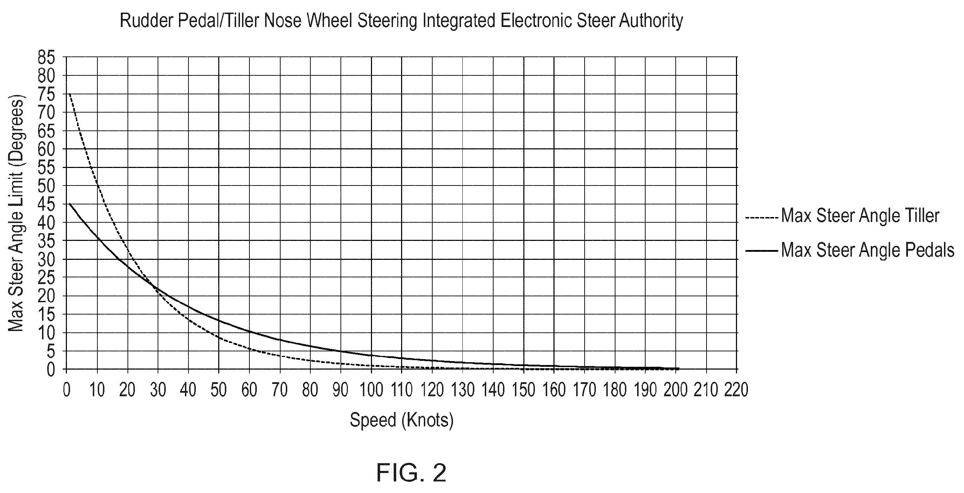

A fully electric speed-proportional nose wheel steering system 100 in accordance with an exemplary embodiment of the present invention is shown in Figures 1 and 2.

The present invention provides an integrated nose wheel control and drive system for an aircraft which provides mean to collect the system electronic inputs via a data concentrator function, then a means of detecting, interpreting and computing those inputs with software, and a means of commanding and powering a final electromechanical drive to steer the nose gear.

Figure 1 shows a structural diagram of an embodiment of the invention. A nose wheel steering command system 100, comprising inputs from the rudder pedals 102 and a hand tiller(s) 103. The rudder pedals 102 and the hand tiller 103 are located in the cockpit 109 of an aircraft. The rudder pedals 102 and the hand tiller 103, in operation, send electrical command inputs to a nose wheel controller 101 by use of digital rotary variable differential transformers (RVDTs), via an ARINC 429 / MIL-STD-1553 databus or equivalent. The electrical command inputs vary depending on the position of the tiller 103 and the pedals 102, which are commanded by the pilot(s). Alternatively, the rudder pedals 102 and hand tiller 103 may send electrical command inputs through an analogue RVDT, a variable potentiometer or a hall effect sensor.

In accordance with any revision of RTCA DO-254 or equivalent and any revision of RTCA DO-178 or equivalent, the controller is a dual redundant controller comprising two separate boxes i.e. two individual controllers performing the same functions in parallel. However, these two individual controllers will be referred to as a single controller, for the sake of simplicity.

The system further comprises ground speed and air speed sensing systems 108, 104. The ground speed system 108 is comprised of one or more wheel speed transducers using passive inductive magnetic sensors. The air speed data shall be provided to the nose wheel controller 101 via an ARINC 429 / MIL-STD-1553 interface with an on-board air data computer (separate system), which is normally installed on an aircraft to provide airspeed information to the pilots by interpreting pitot pressure. The ground speed and air speed sensing systems 108, 104 send electrical signals to the nose wheel controller 101, which vary depending on the measured speed of the aircraft.

A weight-on-wheels microswitch 105 detects whether the aircraft is on the ground or in the air, and sends a signal to the nose wheel controller 101 via an ARINC 429 / MIL-STD-1553 interface to switch between using ground speed or air speed accordingly.

A steering angle sensor 107 detects the current steering angle of the nose wheel and relays it to the nose wheel controller 101. The steering angle sensor 107 can be an RVDT, a potentiometer, a hall effect sensor or any other suitable device.

The nose wheel controller 101 is integrated via an ARINC 429 / MIL-STD-1553 databus, or any other suitable device, and receives digital inputs from the rudder pedals 102, hand tiller 103, ground speed and air speed systems 108, 104, weight-on-wheels microswitch 105 and the steering angle sensor 107, in order to determine a target steering angle using an algorithm, and a percentage error or delta comparison value (between the current steering angle and commanded steering angle) which is used to instantaneously determine the correct" polarity and magnitude of the power supply to the final electric drive, to achieve the desired angle. The ground speed system 108, air speed system 104, weight-on-wheels microswitch 105 and the steering angle sensor 107 are all associated with the landing gear 110.

The nose wheel steering actuator 106, also associated with the landing gear 110, is part of a nose wheel steering electromechanical final drive, which may be of multiple configurations. The electromechanical drive comprises an electric motor which drives a recirculating ball jackscrew connected to a rack-and-pinion steering output gear and a steering tube.

Alternatively, the electromechanical drive means can include an epicyclic gear set driving a nose wheel steering tube via a reduction gearbox. The skilled reader will understand that other arrangements are possible within the scope of the invention. The electric motor may be an AC motor, a DC motor, a brushless DC motor, or any other suitable device. Similarly, other gear systems are readily applicable where necessary in specific systems.

The electromechanical drive incorporates the steering angle sensor 107, and sends instantaneous actual steering position data to the nose wheel controller 101. A feedback loop is used to compare the instantaneous angle to the commanded steering angle (percentage error, or delta value) in order to make adjustments.

During a taxiing regime, a pilot will use the tiller 103 and the rudder pedals 102 to adjust the direction of an aircraft. Each of these sends a digital signal to the nose wheel controller 101. The nose wheel controller 101 adjusts the sensitivity of the signal according to the signal received from the ground speed system 108.

At low speeds, a large turning angle is required for the nose wheel in order to increase manoeuvrability of the aircraft around an airport or airfield. As such, the sensitivity between the tiller 103 and rudder pedals 102 and the nose wheel is high, allowing the pilot to turn the aircraft through large angles with minimal effort. As the aircraft increases speed, for example, during take-off, only small adjustments are made to the angle of the aircraft. Making large adjustments to the angle at high speeds is extremely dangerous, and so the nose wheel controller 101 restricts the turning angle, reducing the risk of an accident.

The nose wheel controller 101 uses the signals received from the ground speed system 108 to adjust the steering authority using an algorithm based on an exponential or logarithmic relationship, illustrated by a curve such as the variable gain curve according to the graph shown in Fig. 2.

Fig 2 is representative of one or more possible exponents representing gain curves of one or more input controls, e.g. the rudder pedals 102 and tiller 103. Such curves may be expressed in the manner of *y* = log_{b} *x or y = b^{x}* in terms of exponential gain inversely proportional to speed, or as shown in Fig 2, an expression such as; *y = x.2* ^{*-(t*/*h)*} akin to exponential decay, or a half-life where gain is inverse-exponentially proportional to speed. Other formulaic expressions may be used to represent a continuously variable gain curve of steer authority vs speed.

As will be appreciated by the skilled reader, other variable gain schemes are possible within the scope of the invention. The adjusted signal is then output to the drive actuator part of the electromechanical drive means to adjust the direction of the aircraft.

The steering angle sensor 107 continuously relays the actual steering angle to the nose wheel controller 101. The nose wheel controller 101 can then make adjustments to the output signal sent to the drive actuator 106.

As the aircraft leaves the ground, the weight-on-wheels microswitch 105 detects that the aircraft in flight, and may centre the nose wheel for retraction. When in flight with the landing gear extended, the nose wheel controller 101 then uses signals sent from the air speed system 104 in order to determine the speed of the aircraft, this provides an alternative means to determine nose wheel steering gain when the wheel may not be turning, such as immediately before landing.

It is to be appreciated that many of the features described above in the exemplary embodiment are readily replaceable depending on the specific needs of a particular system.

## Claims

1. A nose wheel steering system (100) for an aircraft, comprising:
at least one nose wheel control input (102, 103), each at least one nose wheel control input (102, 103) being arranged to produce an electrical output signal proportional to the position of the at least one nose wheel control input (102, 103);
a controller (101) with variable gain at least in part based on speed, arranged to receive the electrical output signal(s) from the at least one nose wheel control input (102, 103), amplify them individually to compute desired target steering angles, and to output an electrical power output signal; and
an electromechanical nose wheel steering drive means (106) arranged to receive the electrical power output signal from the controller (101).

2. A nose wheel steering system (100) according to claim 1, wherein the at least one nose wheel control input comprises rudder pedals (102).

3. A nose wheel steering system (100) according to either of claims 1 or 2, wherein the at least one nose wheel control input comprises a hand tiller (103).

4. A nose wheel steering system (100) according to any preceding claim, wherein the system further comprises an angle position sensor (107) arranged to relay a current nose wheel angle to the controller (101).

5. A nose wheel steering system (100) according to any preceding claim, wherein the system further comprises a ground speed sensor (108) arranged to relay a current ground speed of the aircraft to the controller (101), the controller (101) being further arranged to base the variable gain at least in part on the ground speed.

6. A nose wheel steering system (100) according to any preceding claim, wherein the system further comprises an air speed sensor (104) arranged to relay the current air speed of the aircraft to the controller (101), the controller (101) being further arranged to base the variable gain at least in part on the air speed.

7. A nose wheel steering system (100) according to claim 6, wherein the system further comprises a weight-on-wheels microswitch (105) arranged to send an electric signal to the controller (101) when a weight is detected on the wheels of the aircraft.

8. A nose wheel steering system (100) according to any preceding claim, wherein the electrical output from the controller (101) is of differing polarities depending upon which way the nose wheel is intended to turn.
